# EUROPÄISCHE PATENTANMELDUNG

(11) **EP 2 850 953 A1**
(43) Veröffentlichungstag der Anmeldung: **25.03.2015**
(21) Anmeldenummer: 13184951.5
(22) Anmeldetag: 18.09.2013
(51) Int. Cl.: A23L 1/24

(54) **Majonäse-Zubereitung**

(71) Anmelder: Canonicus Event GmbH & Co. KG, 40549 Düsseldorf (DE)
(72) Erfinder: Köthschneider, Ingo, 40599 Düsseldorf (DE)
(74) Vertreter: Becker, Thomas

(57) **Zusammenfassung**

Die Erfindung betrifft eine Majonäse-Zubereitung.

## Beschreibung

Die Erfindung betrifft eine Majonäse-Zubereitung.

Üblicherweise besteht Majonäse aus den Grundkomponenten: Eigelb und Öl, oft mit Zusätzen wie Senf, Essig, Zitrone, Wein, Salz, Pfeffer etc.

Majonäse hat meist eine weiße bis gelbliche Farbe. Unterschiedliche Anteile der genannten Ingredienzien, Austausch einzelner Grundkomponenten gegen andere, Gewürze oder Geschmacksverstärker ändern an dieser Grundfarbe nur wenig. In der Regel sind die verschiedenen Bestandteile/Ingredienzien der Majonäse vermischt und für den Verbraucher nicht oder nur mit großem Aufwand identifizierbar. Es ergibt sich fast immer eine durchgehende, weitgehend gleichmäßige Färbung.

Majonäse wird im Lebensmittelbereich für verschiedene Zwecke verwendet: in Salaten als sogenanntes Dressing, zur Herstellung von Remoulade, als Beilage bei fastfood wie Bratwurst, Hamburger, Steaks etc.

Der Erfindung liegt die Aufgabe zugrunde, eine modifizierte Majonäse anzubieten, die möglichst viele der folgenden Kennzeichen aufweist:
- die Zusammensetzung/Ingredienzien der jeweiligen Majonäse sollen für den Verbraucher leichter erkennbar sein
- die Majonäse soll positiven Einfluss auf die Ernährung haben
- es sollen unterschiedliche Geschmacksrichtungen und Verwendungen möglich sein, die für den Verbraucher leichter identifizierbar sind
- die Majonäse soll für bestimmte Personengruppen eine besondere Identifizierung und/oder Attraktivität auslösen.

### Der Erfindung liegt folgende Überlegung zugrunde:

Majonäse eignet sich für die Zumischung von verschiedenen Substanzen/Wirkstoffen, beispielsweise Substanzen mit Heilwirkung (Heilkräuter, Vitamine etc).

Majonäse wird zwar in unterschiedlichen Behältnissen konfektioniert (insbesondere Eimern, Dosen, Tuben, Schläuchen), aber fast immer in Form eines Strangs aus dem Behältnis portioniert.

Die Majonäse-Zubereitung wird erfindungsgemäß so eingestellt, dass der daraus gebildete Portions-Strang Zonen unterschiedlicher Zusammensetzung und/oder unterschiedlicher Farbgebung aufweist, die klar voneinander abgrenzbar und für den Verbraucher als solche erkennbar sind. Dabei können die unterschiedlichen Zonen auch unterschiedliche Geschmacksrichtungen und/oder unterschiedliche Konsistenzen aufweisen.

Zonen unterschiedlicher Farbgebung lassen sich besonders leicht identifizieren.

Im einfachsten Fall eines Strangs mit Kreisquerschnitt und zwei Zonen unterschiedlicher Eigenschaften ist der Kreis in zwei Halbkreise geteilt, wobei ein Halbkreis die Farbe F1 aufweist und die Zusammensetzung Z1 während der andere Halbkreis durch eine Farbe F2 und eine Zusammensetzung Z2 definiert ist.

Auf diese Weise lassen sich einzelne Geschmacks- und Farbzonen klar voneinander differenzieren; die optische und geschmackliche Vermischung vor dem Genuss der Majonäse wird vermieden.

Dabei kann mindestens eine Zone auch aus einer Zusammensetzung bestehen, die eine grundsätzlich andere Zusammensetzung als Majonäse besitzt. Diese Zone kann zum Beispiel Tomatenketchup sein oder einem Tomatenketchup ähnlich sein.

Gezielt können zum Beispiel Vitamine in eine Zone und/oder Heilkräuter in eine andere Zone eingemischt/eingearbeitet werden.

Die Aufteilung führt dazu, dass die Vermischung der Zonen erst im Mund des Endverbrauchers erfolgt. Hierdurch lassen sich auch synergistische Effekte in dem Sinn erzielen, dass bestimmte Geschmackseffekte und/oder Essempfindungen erst im Mund beim Mischen der Zonen unterschiedlicher Zusammensetzung ausgelöst werden.

Bei Zahnpasten ist es bekannt, einen Strang aus verschiedenen Zonen mit medizinisch/pflegerisch unterschiedlich wirkenden Substanzen zu bilden. Bei Zahnpasten handelt es sich jedoch um ein völlig anderes Produkt und Anwendungsgebiet als bei dem Lebensmittel/Genussmittel/Verzehrmittel Majonäse.

Die mit unterschiedlichen (Farb)Zonen gestaltete Majonäse (der Majonäsestrang) kann wie folgt genutzt werden:
Staaten, Vereine, insbesondere Sportvereine, Industrieunternehmungen, Reiseveranstalter, Universitäten, Hotels, Festivals, Kulturveranstaltungen, Sportveranstaltungen etc. werden regelmäßig beworben, oft mit einem bestimmten Logo und/oder bestimmten Farben/Farbkombinationen. Nachstehend folgen einige Beispiele:
   - Die Nationalfarben Deutschlands sind "schwarz, rot, gold",
   - Die Farben des Fußballvereins Borussia Dortmund sind gelb/schwarz,
   - Irlands Reisebüro wirbt mit den Farben grün/rot,
   - Das Lufthansa logo ist durch die Farben gelb, blau und weiß bestimmt.

Entsprechende Farbkombinationen können erfindungsgemäß in einer Majonäse abgebildet werden, das heißt, die bisher einfarbige Majonäse wird durch eine Majonäse ersetzt, die mindestens zwei Zonen unterschiedlicher Farbgebung aufweist, die sich wiederum durch unterschiedliche Zusammensetzung unterscheiden können.

Das Lebensmittel Majonäse kann in diesem Fall über die Farbzusammenstellung eine Identifizierung mit einem bestimmten Verein, einem Land, einer Organisation, einer Firma etc. schaffen.

Der aus dem Behälter entnommene Strang kann leicht in endliche Strangteile aufgeteilt werden, um unterschiedliche Portionsmengen einzustellen.

Die einzelnen Zonen erstrecken sich entsprechend vorzugsweise über die axiale Länge des Strangs. Sie liegen also - über einen Querschnitt des Strangs betrachtet - nebeneinander.

Grundsätzlich wäre es auch möglich, die Zonen unterschiedlicher Farbgebung/Zusammensetzung in Axialrichtung des Strangs hintereinander anzuordnen, die zugehörige Konfektionierung im Behälter ist jedoch schwieriger.

Die Aufbereitung der Majonäse und Konfektionierung in einer Verpackung kann auf unterschiedliche Weise erfolgen.

Die Majonäse kann leicht als Strang mit beliebigem Querschnitt (entsprechend der Geometrie der Austrittsöffnung des Behältnisses) aus der Verpackung entnommen beispielsweise durch Drücken, Pressen, Saugen.

In ihrer allgemeinsten Ausführungsform betrifft die Erfindung eine Majonäse-Zubereitung, wobei ein daraus gebildeter Strang im Querschnitt mindestens zwei Zonen unterschiedlicher Zusammensetzung und/oder unterschiedlicher Farbgebung aufweist.

Die meisten Farbkombinationen, die zur Darstellung unterschiedlicher Zusammensetzungen/Geschmacksrichtungen beziehungsweise zur sonstigen Identifizierung der Majonäse verwendet werden, bestehen aus zwei bis vier Farben. Entsprechend besteht die Majonäse ebenfalls meistens aus zwei bis vier Farbbereichen, wenngleich die Erfindung keine Beschränkung vorgibt.

Folgende Ausführungsformen der Majonäse-Zubereitung liegen im Rahmen der Erfindung:
- die Zonen unterschiedlicher Zusammensetzung und/oder unterschiedlicher Farbgebung haben in etwa die gleiche Größe, wobei "in etwa" unter Berücksichtigung technischer Toleranzen zu bewerten ist. Bei einem viskosen Medium wie Majonäse lassen sich keine exakten Trennlinien zwischen den Zonen ausbilden. Unterschiedliche Zonen lassen sich trotzdem klar und deutlich unterscheiden.
- der Strang weist mindestens eine der folgenden Querschnittsformen auf: Kreis, Oval, Halbkreis, Vieleck, Vieleck mit abgerundeten Ecken, Stern.
- die Zonen unterschiedlicher Farbgebung sind weitgehend symmetrisch über den Querschnitt des Strangs verteilt angeordnet. "Weitgehend" ist wiederum unter technischen Gesichtspunkten und nicht im mathematisch exakten Sinn zu verstehen. Wenn die Majonäse beispielsweise in einer Tube verpackt ist und der Benutzer nach Öffnen der Tube einen Strang Majonäse ausdrückt weist dieser Strang auch dann keinen mathematisch exakten Kreisquerschnitt auf, wenn die Tubenöffnung exakt rund ist. Grundsätzlich (herstellungstechnisch betrachtet) hat der Strang jedoch einen Kreisquerschnitt.

- die Zonen unterschiedlicher Zusammensetzung/Farbgebung können rotationssymmetrisch über den Querschnitt des Strangs verteilt sein.
- alternativ können die verschiedenen Zonen des Strangs punktsymmetrisch über den Querschnitt des Strangs verteilt angeordnet werden,
- ebenso können die einzelnen Zonen spiegelsymmetrisch über den Querschnitt des Strangs verteilt angeordnet sein oder als Streifen, die sich quer durch den Strang erstrecken.

Zur Identifizierung der verschiedenen Zonen können bei Bedarf entsprechende Farbstoffe eingesetzt werden, zum Beispiel aus der Gruppe: pflanzliche Farbstoffe, naturidentische Farbstoffe, künstliche Farbstoffe, Farbpigmente.

Auch ein Pulvermaterial, beispielsweise Goldpulver, kann als Bestandteil der Majonäse verwendet werden.

Verschiedene dieser Farbstoffe erlauben gleichzeitig weitere Wirkungen, die in eckigen Klammern [] angegeben sind. Die erzielbare Farbgebung ist in runden Klammern () genannt.

Geeignete Zusätze/Farbstoffe sind unter anderem:
- Safran (gelb)
- Aktivkohle (schwarz, anthrazit) [bindet Gifte, gegen Durchfallerkrankungen]
- Curcuma, ein Ingwergewächs (gelb)
- Sepiatinte (schwarz)
- Paprika (rot, gelb) [Vitamine]
- Rote Beete (rot) [Vitamine]
- Tomate (rot) [Vitamine]
- Basilikum (grün) [Vitamine]
- Brokkoli (grün) [Heilgemüse gegen Prostataerkrankungen, Vitamine]
- Rucola (grün)
- Spinat (grün) [Heilgemüse gegen Gelbsucht]
- Heidelbeeren (blau)
- Borretsch (blau) [Heilkraut gegen Herzschwäche, verdauungsfördernd]
- Gold (gold)

Die Farbgebung der Majonäse beziehungsweise der einzelnen Mischungen (die später die Zonen bilden) erfolgt vorzugsweise bei der Herstellung, um eine vollständig Durchfärbung zu erreichen.

Die Einstellung einzelner (Farb)Zonen erfolgt bei der weiteren Verarbeitung/Konfektionierung der Majonäse zum fertigen Produkt.

Beispielsweise werden drei Teilstränge unterschiedlicher Farbe entlang einer Düse zu einem gemeinsamen Strang mit drei Farbzonen zusammengeführt und anschließend in die Verpackung, zum Beispiel einen Topf oder eine Tube, gefördert.

Eine alternative Zubereitung besteht darin, Majonäsen unterschiedlicher Zusammensetzung/Farbe in eine Verpackung einzuleiten, die abschnittweise durch dünne, insbesondere verformbare Wände in verschiedene Zonen gegliedert ist. In jede Zone kann dann beispielsweise ein Teilstrang Majonäse der gewünschten Art/Farbe eingebracht werden.

Beim Entnehmen der Majonäse, zum Beispiel beim Ausdrücken, vereinigen sich die Teilstränge aus den einzelnen Zonen (an der Auslauföffnung des Behältnisses) zu einem gemeinsamen Strang mit in Längsrichtung verlaufenden Streifen/Zonen unterschiedlicher Art/Farbe. Die Aufteilung der Zonen kann durch die Anordnung der genannten Wände eingestellt werden.

Darüber hinaus stehen dem Fachmann aus der allgemeinen Konstruktionslehre Alternativen zur Verfügung, um im Sinne der Erfindung unterschiedliche Majonäsen nebeneinander in einem Behältnis anzuordnen und/oder so in dem Behältnis anzuordnen, dass sie in der oben beschriebenen Konfektionierung das Behältnis verlassen.

Die Erfindung wird nachstehend anhand verschiedener Ausführungsbeispiele näher beschrieben.

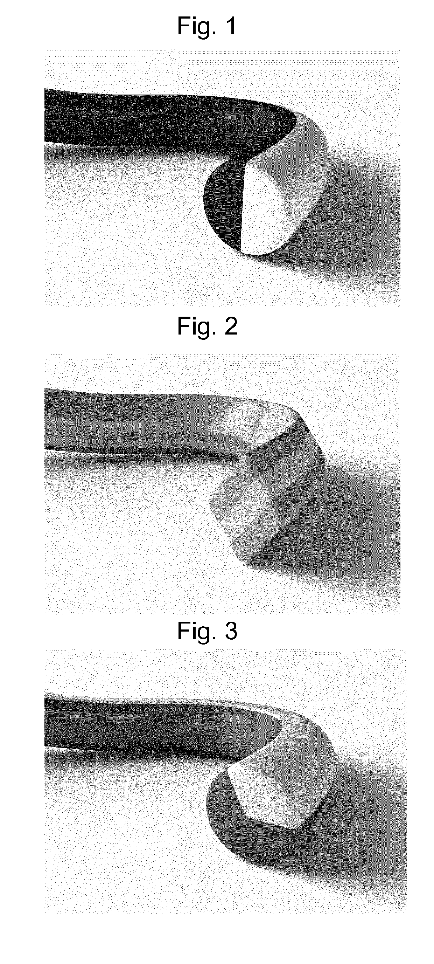

Die Figuren 1 bis 9 zeigen unterschiedliche Konfektionierungen eines Majonäsestrangs gemäß der Erfindung.

Figur 1 zeigt schematisch einen Majonäse-Strang nach Auspressen aus einer (nicht dargestellten) Tube. Der Strang hat etwa einen Kreisquerschnitt, der in zwei Halbkreise geteilt ist, wobei ein Halbkreis (rechts) als Wirkstoff Safran enthält und entsprechend gelb (RAL 1023) eingefärbt ist und der andere (links) als spezielles Ingredienz Aktivkohle enthält, die diesem Bereich die Farbe schwarz (RAL 9017) verleiht.

Der Majonäse-Strang gemäß Figur 2 hat einen rhombusartig gestalteten Querschnitt mit drei nebeneinander verlaufenden Farbzonen, die sich parallel bzw. senkrecht zu den im Wesentlichen planaren Außenflächen des Rhombus erstrecken. Die Zonen unterscheiden sich nicht nur in der Farbe, sondern auch in ihrer Zusammensetzung, wobei die unterschiedlichen Zusammensetzungen für die unterschiedlichen Farben verantwortlich sind. Die linke Zone und die rechte Zone sind grün (RAL 6032), die mittlere weiß (RAL 9016).

Das Beispiel gemäß Figur 3 ist eine Kombination der Beispiele nach Figur 1 und 2 mit einem zylindrischen Strang (also einem Kreisquerschnitt) und drei Farbzonen, die im Querschnitt punktsymmetrisch nach Art von Tortenstücken angeordnet sind. Die linke Zone ist durch Anteile an Tomaten rot (RAL 3000), die rechte Zone weiß (RAL 9016) und die untere Zone wegen eines Anteils an Heidelbeeren und blauem Farbstoff blau (RAL 5002).

Figur 4 zeigt einen Majonäse-Strang mit 6 Zonen, die im wesentlich gleichmäßig um eine Mittenlängsachse des Strangs angeordnet sind, und zwar abwechselnd in den Farben gelb und schwarz. Die Oberfläche des Strangs ist gewellt.

In Figur 5 ist das auslassseitige Ende einer Majonäse-Tube zu erkennen, aus dem ein rot-weißer Strang herausgedrückt wurde, der ähnlich zu dem Strang gemäß Figur 1 gestaltet ist, jedoch in den Farben RAL 3000 und RAL 9016. Innerhalb der Tube sind die unterschiedlichen Farbzonen nebeneinander angeordnet.

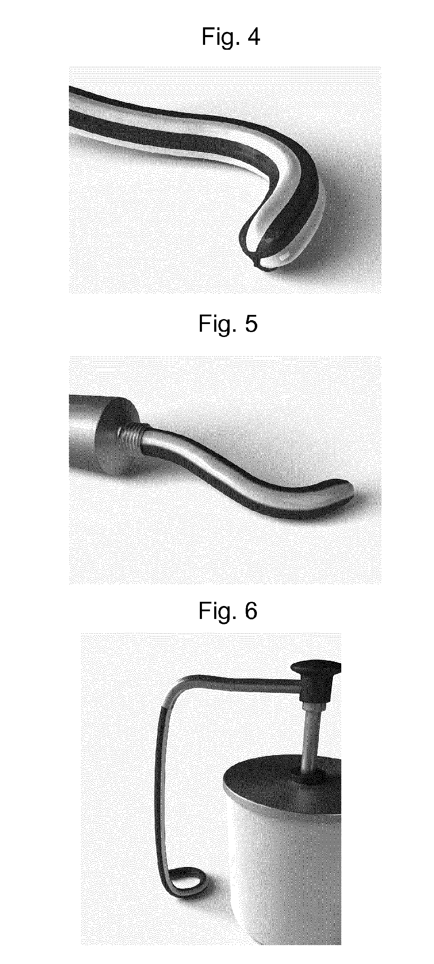

Ein topfartiges Majonäse-Behältnis ist in Figur 6 gezeigt. Aus einem Auslaufrohr ist ein Majonäse-Strang ausgetreten, der zweifarbig (grün/weiss) ist

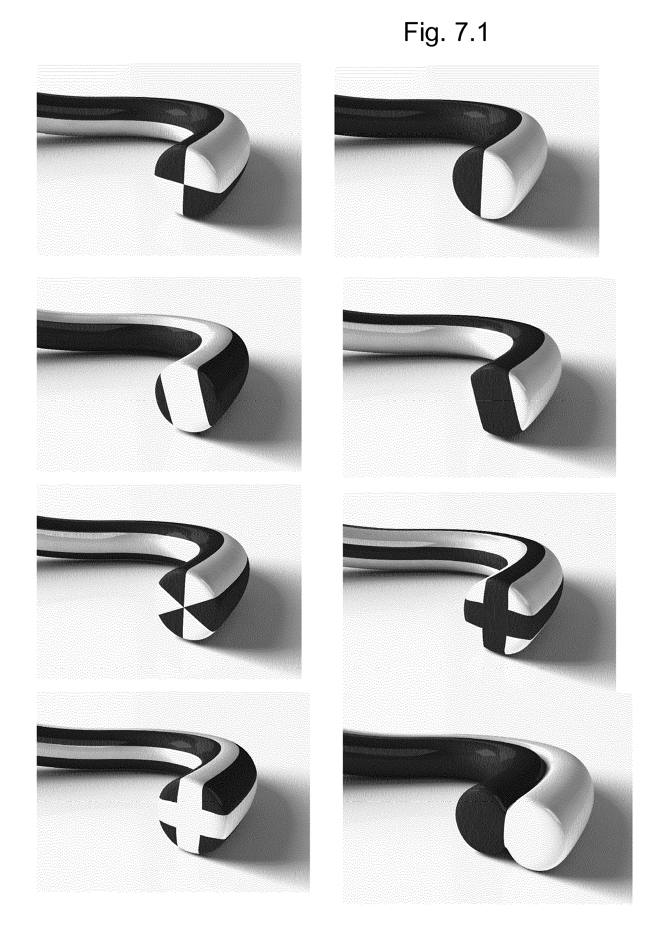

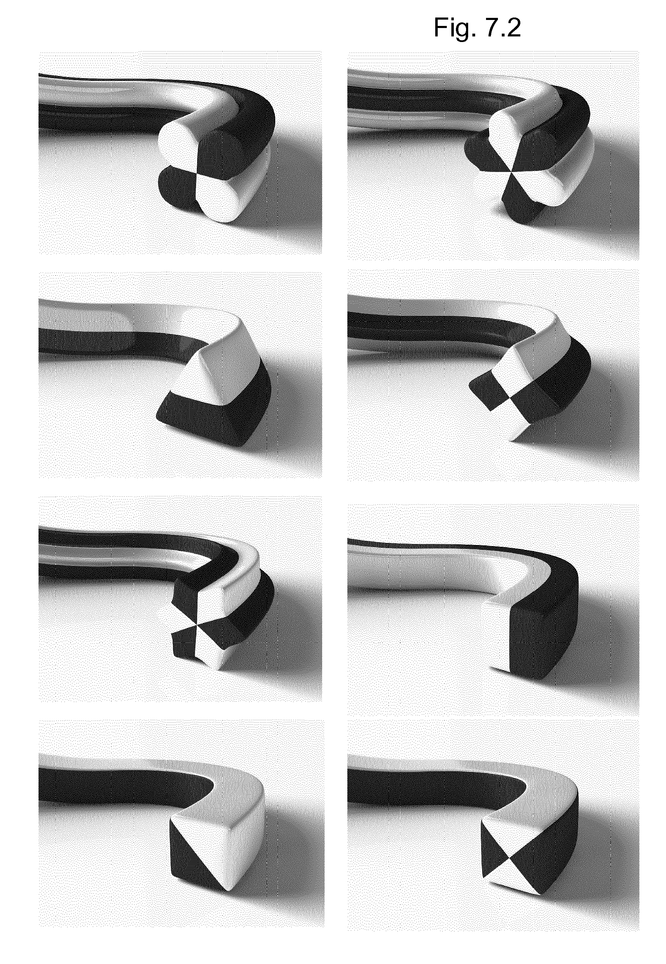

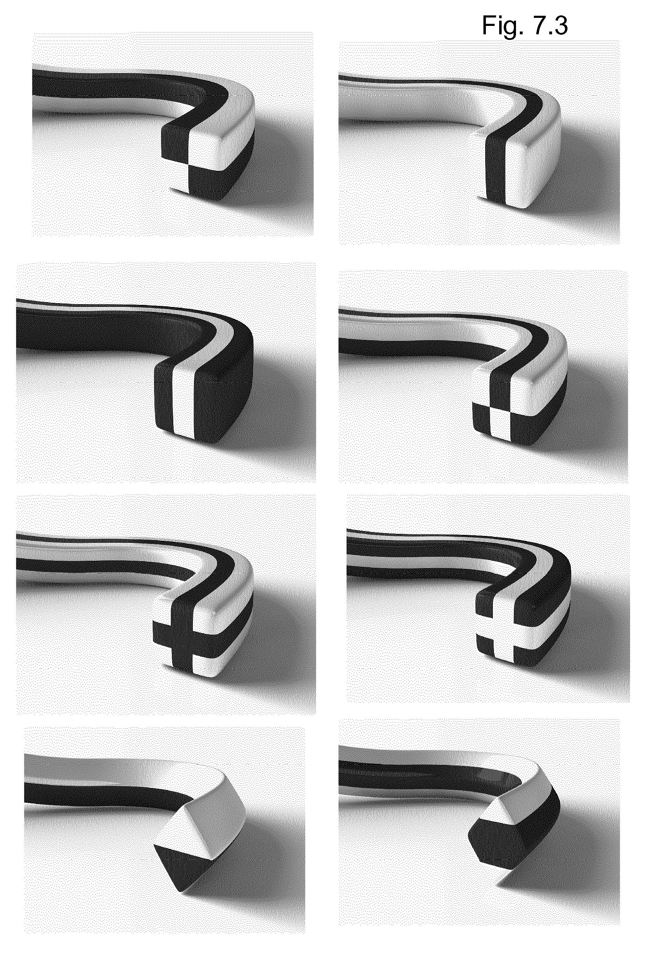

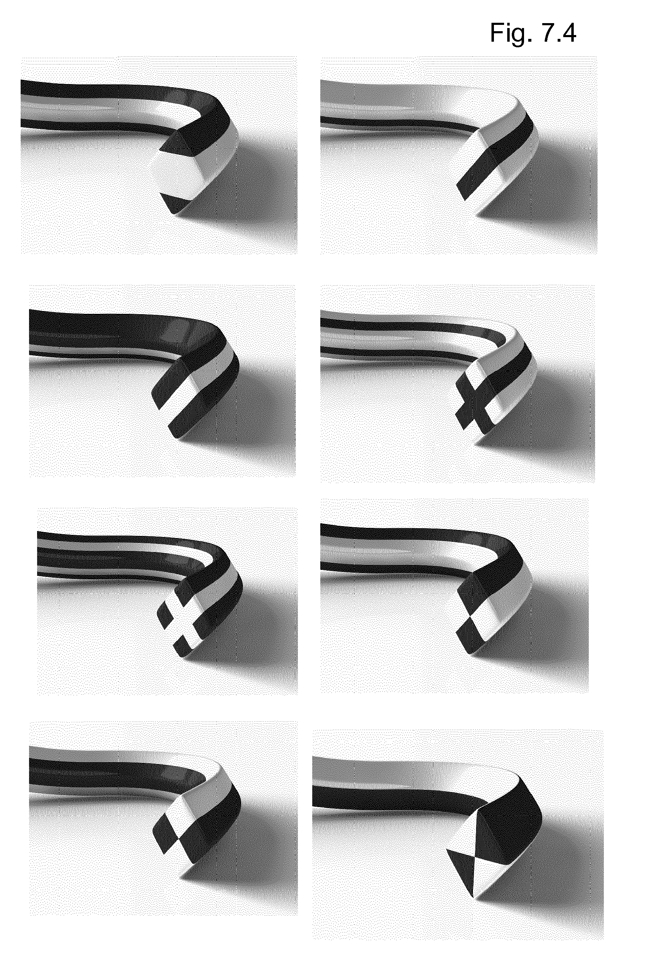

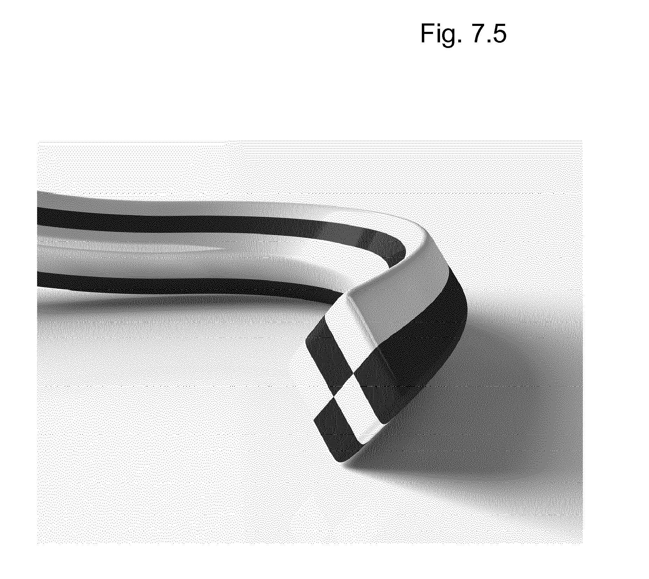

In Figur 7 sind 33 Varianten einer erfindungsgemäß gestalteten Majonäse dargestellt. Die einzelnen Muster/Ausführungsformen unterscheiden sich
- in ihrer äußeren Geometrie, unter anderem rund, rechteckig, sternförmig, kleeblattförmig
- der Aufteilung der einzelnen, über den Querschnitt verteilten Zonen. Es ist zu erkennen, dass sich beispielsweise 2, 3,4,5,6 oder mehr Zonen innerhalb des Querschnitts einstellen lassen.

Die helle Zone ist jeweils mit einem Farbstoff RAL 1023 gelb eingefärbt, die dunklere Zone durch Sepiatinte schwarz (RAL 9017) verändert.

Die Farben lassen sich durch Verwendung anderer Ausgangsstoffe oder zusätzlicher Ingredienzien für die Majonäse variieren, zum Beispiel wie folgt:
- grün/weiß (zum Beispiel RAL 6032/ RAL9016)
- rot/weiß (zum Beispiel RAL 3000/ RAL9016)
- blau/weiß (zum Beispiel RAL 5002/RAL 9016)
- schwarz/weiß (zum Beispiel RAL 9017/RAL9016)

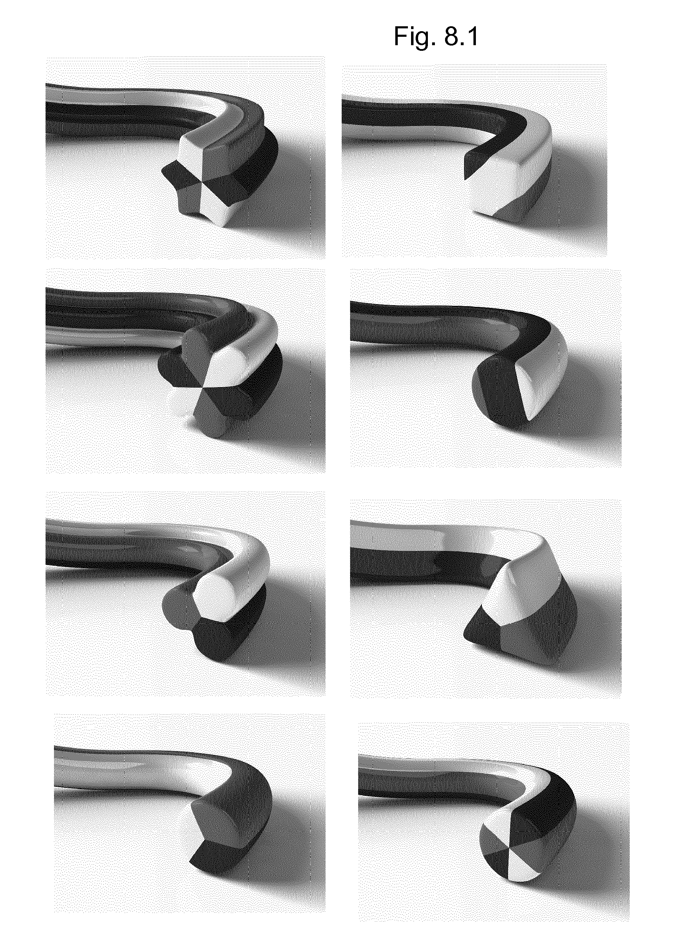

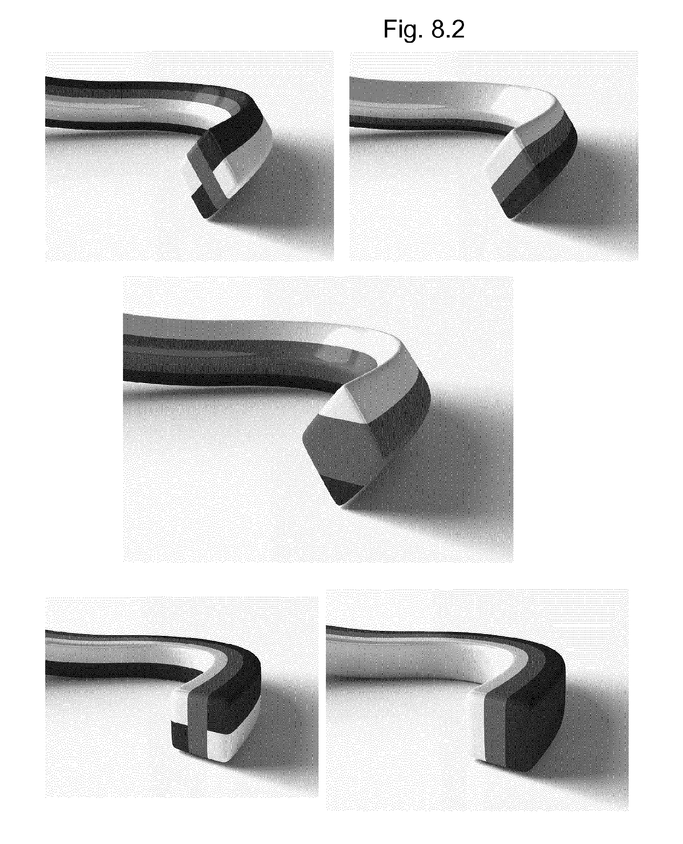

Figur 8 zeigt 13 Varianten eines Majonäse-Strangs mit einem dreifarbigen Querschnitt in unterschiedlicher geometrischer Anordnung, wobei die dunkle Zone schwarz ist (RAL 9017) , die helle gelb (RAL 1012) und die dritte Zone rot (RAL 3000), das heißt, die Farbkombination entspricht den Nationalfarben Deutschlands.

Jede der drei Farbzonen kann eine beliebige andere Farbe aufweisen und entsprechend eine unterschiedliche Zusammensetzung enthalten.

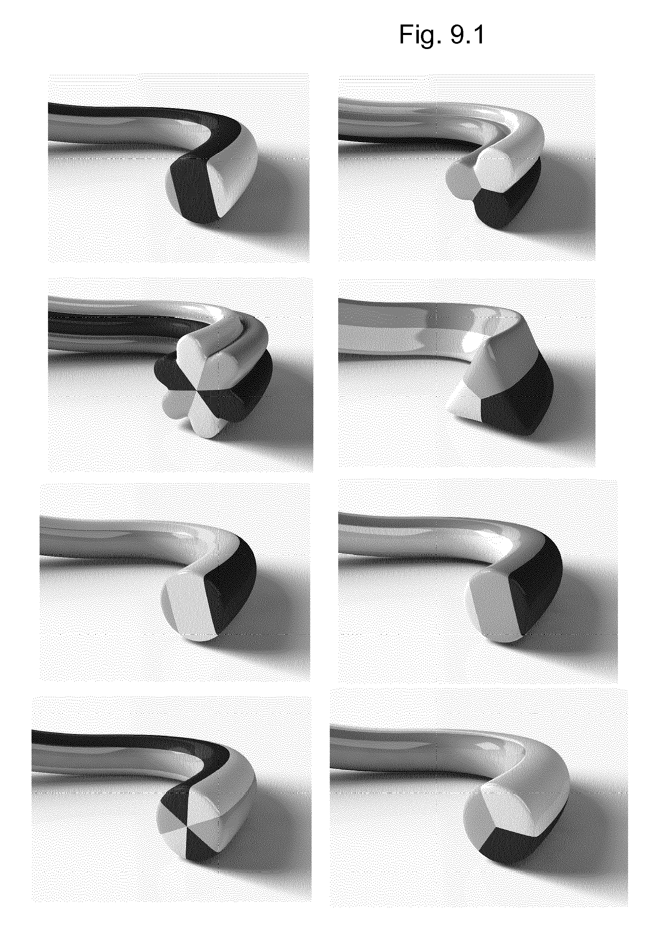

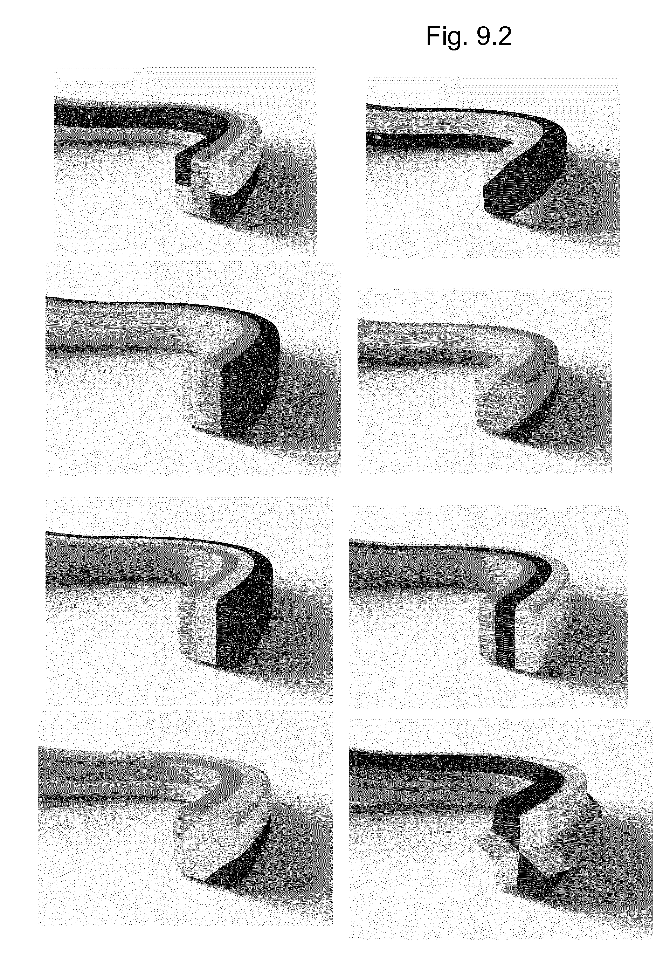

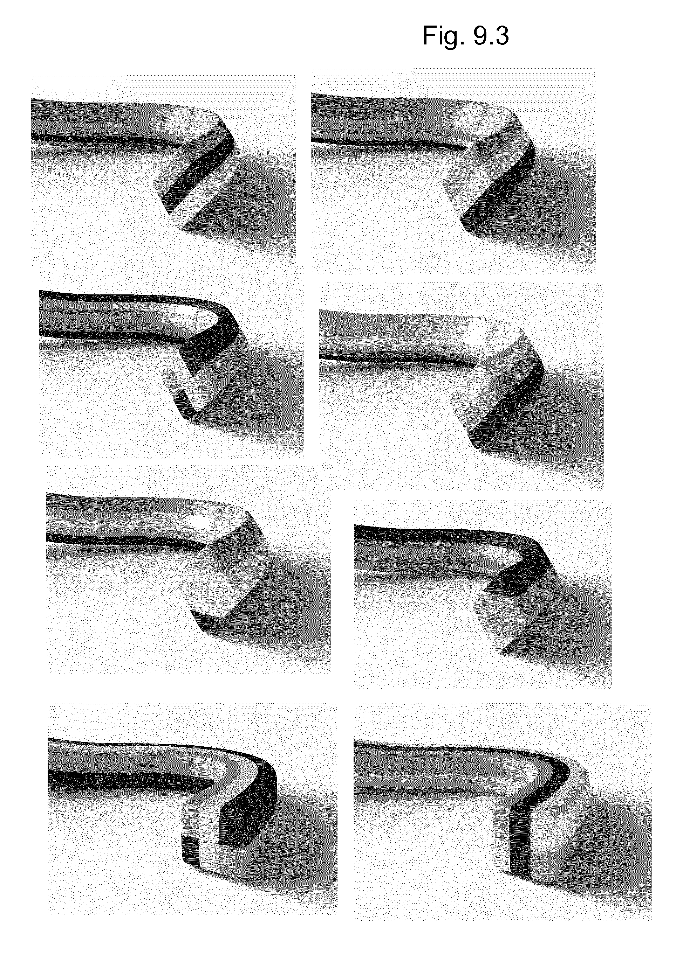

Die insgesamt 24 Abbildungen zu Figur 9 zeigen Muster/Modelle in den Farben weiß (helle Zone), schwarz (dunkle Zone) und grün (weitere Zone), wobei wiederum die entsprechenden, oben genannten RAL Farben vorhanden sind, die aber beliebig abgewandelt werden können.

Bei allen dargestellten Majonäse-Strängen wurden neben den erwähnten Zusatzstoffen eine konventionelle Majonäse-Zubereitung eingesetzt, wie einleitend vorgestellt.

## Patentansprüche

1. Majonäse-Zubereitung, wobei ein daraus gebildeter Strang im Querschnitt mindestens zwei Zonen unterschiedlicher Zusammensetzung und/oder unterschiedlicher Farbgebung aufweist.

2. Majonäse-Zubereitung nach Anspruch 1, bei der die Zonen unterschiedlicher Farbgebung und/oder Zusammensetzung gleiche Größe haben.

3. Majonäse-Zubereitung nach Anspruch 1, wobei der daraus gebildete Strang mindestens eine der folgenden Querschnittsformen aufweist: Kreis, Oval, Halbkreis, Vieleck, Vieleck mit abgerundeten Ecken, Stern.

4. Majonäse-Zubereitung nach Anspruch 1, bei der die Zonen unterschiedlicher Farbgebung und/oder unterschiedlicher Zusammensetzung symmetrisch über den Querschnitt des Strangs verteilt angeordnet sind.

5. Majonäse-Zubereitung nach Anspruch 1, bei der die Zonen unterschiedlicher Farbgebung und/oder unterschiedlicher Zusammensetzung rotationssymmetrisch über den Querschnitt des Strangs verteilt angeordnet sind.

6. Majonäse-Zubereitung nach Anspruch 1, bei der die Zonen unterschiedlicher Farbgebung und/oder unterschiedlicher Zusammensetzung punktsymmetrisch über den Querschnitt des Strangs verteilt angeordnet sind.

7. Majonäse-Zubereitung nach Anspruch 1, bei der die Zonen unterschiedlicher Farbgebung und/oder unterschiedlicher Zusammensetzung spiegelsymmetrisch über den Querschnitt des Strangs verteilt angeordnet sind.

8. Majonäse-Zubereitung nach Anspruch 1, bei der die Zonen unterschiedlicher Farbgebung durch mindestens einen Farbstoff aus der Gruppe: pflanzliche Farbstoffe, naturidentische Farbstoffe, künstliche Farbstoffe, Farbpigmente koloriert sind.

9. Majonäse-Zubereitung nach Anspruch 1, die mindestens einen Farbstoff enthält, der auf Basis der folgenden Rohstoffe hergestellt wurde: Safran, Aktivkohle, Rote Beete, Tomate, Spinat, Heidelbeeren, Sepiatinte.

10. Majonäse-Zubereitung nach Anspruch 1, bei der die Zonen unterschiedlicher Zusammensetzung mindestens eine der folgenden Substanzen enthalten: Vitamine, Heilkräuter, Heilgemüse, Absorptionsmittel, Adsorptionsmittel.
